# EUROPEAN PATENT APPLICATION

(11) **EP 4 307 202 A1**
(43) Date of publication of application: **17.01.2024**
(21) Application number: 22932156.7
(22) Date of filing: 18.03.2022
(51) Int. Cl.: G06Q 30/0202, G06Q 30/0204

(54) **INFORMATION PROCESSING DEVICE, INFORMATION PROCESSING METHOD, AND PROGRAM**

(71) Applicant: Rakuten Group, Inc., Setagaya-ku Tokyo 158-0094 (JP)
(72) Inventor: BANSAL, Mayank, Tokyo 158-0094 (JP); PARIKH, Gaurav, Tokyo 158-0094 (JP); MEDE, Kyle Aaron, Tokyo 158-0094 (JP)
(74) Representative: Hoffmann Eitle
(86) International application number: PCT/JP2022/012558
(87) International publication number: WO 2023/175883

(57) **Abstract**

An information processing apparatus (10) includes: a first training unit configured to train a first learning model so as to receive online information of a user having position information as an input, and output an online behavior feature vector of the user having the position information; and a second training unit configured to train a second learning model so as to receive the online behavior feature vector of the user having the position information as an input, and output an offline behavior feature vector of the user having the position information.

## Description

### TECHNICAL FIELD

The present invention relates to an information processing apparatus, an information processing method, and a program thereof, and specifically relates to a technique for using information regarding online behavior of a user.

### BACKGROUND ART

Heretofore, a technique is known in which position information of a terminal device is acquired, and the behavior of a user of the terminal device is detected from the position information. For example, a technique is disclosed, in Patent Literature Document 1, in which an access point in a wireless LAN acquires position information of a terminal device from the terminal device, and detects that a user of the terminal device has visited a predetermined store.

### LISTING OF REFERENCES

### PATENT LITERATURE DOCUMENTS

Patent Literature Document 1: JP 2015-37244A

### SUMMARY OF THE INVENTION

### PROBLEMS TO BE SOLVED BY THE INVENTION

With the technique disclosed in Patent Literature Document 1, places visited by a user of a terminal device can be understood from position information of the terminal device. On the other hand, utilization of information (online information) regarding behavior of a user through web services when the user is online (online behavior) is progressing. If a relationship between the online information and offline information such as information regarding places where the user may visit can be constructed, the offline information can be estimated from the online information. Accordingly, advertisements and services related to the offline information can be effectively provided to the user.

The present invention has been made in view of the above problem, and an object thereof is to provide a technique for constructing a relationship between information regarding online behavior of a user and information regarding offline behavior of the user.

### SOLUTION TO THE PROBLEMS

In order to solve the above problem, one aspect of an information processing apparatus according to the present invention includes: a first training means for training a first learning model so as to receive online information of a user having position information as an input, and output an online behavior feature vector of the user having the position information; and a second training means for training a second learning model so as to receive the online behavior feature vector of the user having the position information as an input, and output an offline behavior feature vector of the user having the position information.

The information processing apparatus described above may further include a generation unit configured to generate an offline behavior feature vector of the user having the position information from the position information; and a third training unit configured to train a third learning model so as to receive, as an input, the offline behavior feature vector of the user having the position information generated by the generation unit, and output information representing offline behavior of the user having the position information.

The information representing offline behavior of the user may include information regarding a place predicted to be visited by the user.

The information processing apparatus described above may further include: a first estimation unit configured to estimate an online behavior feature vector of a user having no position information by inputting online information of the user having no position information to the first learning model; a second estimation unit configured to estimate an offline behavior feature vector of the user having no position information by inputting the online behavior feature vector of the user having no position information to the second learning model; and a third estimation unit configured to estimate information regarding offline behavior of the user having no position information by inputting the offline behavior feature vector of the user having no position information to the third learning model.

The online information of the user is information regarding behavior of the user through usage of web services when the user is online.

In order to solve the above problem, one aspect of an information processing method according to the present invention includes: a first training step of training a first learning model so as to receive online information of a user having position information as an input, and output an online behavior feature vector of the user having the position information; and a second training step of training a second learning model so as to receive the online behavior feature vector of the user having the position information as an input, and output an offline behavior feature vector of the user having the position information.

The information processing method described above may further include: a generation step of generating an offline behavior feature vector of the user having the position information from the position information; and a third training step of training a third learning model so as to receive, as an input, the offline behavior feature vector of the user having the position information output from the second learning model, and output information representing offline behavior of the user having the position information, wherein, in the third training step, the third learning model is trained using the offline behavior feature vector of the user having the position information generated in the generation step.

In order to solve the above problem, one aspect of an information processing program according to the present invention is an information processing program for causing a computer to execute information processing, the program causing the computer to execute processing, wherein the processing includes: a first training processing for training a first learning model so as to receive online information of a user having position information as an input, and output an online behavior feature vector of the user having the position information; and a second training processing for training a second learning model so as to receive the online behavior feature vector of the user having the position information as an input, and output an offline behavior feature vector of the user having the position information.

The processing further includes: a generation processing for generating an offline behavior feature vector of the user having the position information from the position information; and a third training processing for training a third learning model so as to receive, as an input, the offline behavior feature vector of the user having the position information output from the second learning model, and output information representing offline behavior of the user having the position information, wherein the third training processing includes processing for training the third learning model using the offline behavior feature vector of the user having the position information generated in the generation processing.

### ADVANTAGEOUS EFFECTS OF THE INVENTION

According to the present invention, it is possible to construct a relationship between information regarding online behavior of a user and information regarding offline behavior of the user.

The objects, aspects, and effects of the present invention described above and the objects, aspects, and effects of the present invention not described above can be understood by a person skilled in the art based on the following modes for carrying out the invention by referring to the accompanying drawings and the description of the claims.

### BRIEF DESCRIPTION OF THE DRAWINGS

FIG. 1 shows an exemplary configuration of an information processing system.
FIG. 2 shows an exemplary functional configuration of an information processing apparatus 10 according to an embodiment.
FIG. 3 shows a procedure of generating an offline behavior feature vector.
FIG. 4 shows an example of a schematic architecture of an online feature estimation model 111.
FIG. 5 shows an example of a schematic architecture of an offline feature estimation model 112.
FIG. 6 shows an example of a schematic architecture of a classification model 113.
FIG. 7 is a schematic diagram for describing processing for estimating offline behavior of a user having no position information.
FIG. 8 shows an exemplary hardware configuration of the information processing apparatus 10 and a user device 11.
FIG. 9 shows a flowchart of processing executed by the information processing apparatus 10.

### DESCRIPTION OF EMBODIMENTS

Embodiments of the present invention will now be described in detail with reference to the accompanying drawings. Out of the component elements described below, elements with the same functions have been assigned the same reference numerals, and description thereof is omitted. Note that the embodiments disclosed below are mere example implementations of the present invention, and it is possible to make changes and modifications as appropriate according to the configuration and/or various conditions of the apparatus to which the present invention is to be applied. Accordingly, the present invention is not limited to the embodiments described below. The combination of features described in these embodiments may include features that are not essential when implementing the present invention.

### Configuration of Information Processing System

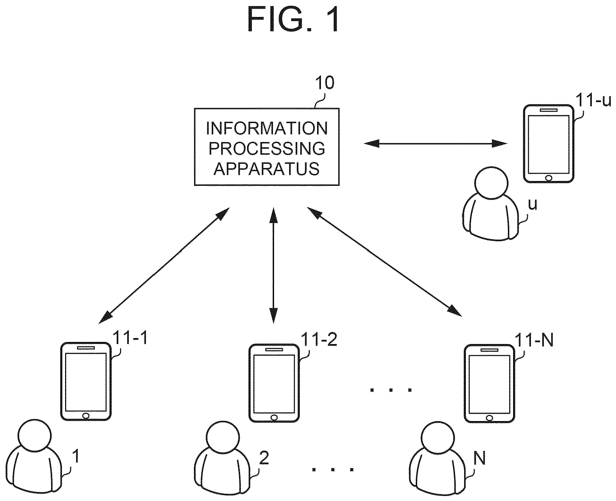

FIG. 1 shows an exemplary configuration of an information processing system according to the present embodiment. In one example, as shown in FIG. 1, the present information processing system includes an information processing apparatus 10, a plurality of user devices 11-1 to 11-N (N>1) used by any plurality of users 1 to N, and a user device 11-u used by a user u. Note that in the following description, the user devices 11-1 to 11-N and 11-u can be referred to collectively as user devices 11 unless otherwise specified. Also, in the following description, the terms "user device" and "user" can be used synonymously.

The user device 11 is, for example, a device such as a smartphone or a tablet, and can communicate with the information processing apparatus 10 via a public network such as LTE (Long Term Evolution) or a wireless communication network such as a wireless LAN (Local Area Network). The user device 11 has a display unit (display screen) such as a liquid crystal display, and each user can perform various operations through a GUI (Graphic User Interface) installed in the liquid crystal display. The operations include various operations performed with a finger or a stylus on content such as images displayed on the screen, such as a tap operation, a slide operation, or a scroll operation.

Note that the user device 11 is not limited to a device of the form shown in FIG. 1, and may also be a device such as a desktop PC (Personal Computer) or a laptop PC. In this case, the operations performed by each user can be performed using an input device such as a mouse or a keyboard. Also, the user device 11 may include a display screen separately.

The user device 11 can use a service by logging into a web service (Internet-related service) provided via the information processing apparatus 10, from the information processing apparatus 10 or another device (not shown). The web service can include an internet shopping mall, an online supermarket, or a service relating to communication, finance, real estate, sports, or travel, which are provided via the Internet. The user device 11 can transmit information relating to the user of the user device 11 to the information processing apparatus 10 by using such a web service. For example, the user device 11 can transmit, to the information processing apparatus 10, information (online information) regarding behavior of the user through web services when the user is online (online behavior).

Also, the user device 11 can perform positioning calculation based on signals or the like received from GPS (Global Positioning System) satellites (not shown), generate information obtained through the calculation as position information of the user device 11, and transmit the generated information to the information processing apparatus 10.

The information processing apparatus 10 acquires online information and position information from the user devices 11, and estimates offline behavior (e.g., information regarding places where the user of interest may visit) of any user based on the information. It is assumed that, in the present embodiment, the information processing apparatus 10 is configured to be able to acquire position information of the user devices 11-1 to 11-N (that is, the users 1 to N), and does not acquire position information of the user device 11-u (that is, the user u). In the present embodiment, the users 1 to N may be referred to as users having position information, and the user u may be referred to as a user having no position information.

### Functional Configuration of Information Processing Apparatus 10

The information processing apparatus 10 according to the present embodiment first acquires online information and position information from the user devices 11-1 to 11-N. The information processing apparatus 10 trains various types of learning models for associating information regarding online behavior of a user with information regarding offline behavior of the user using the online information and position information. Then, the information processing apparatus 10 estimates offline behavior of the user u of the user device 11-u by performing machine learning using online information acquired from the user device 11-u and the various types of trained learning models. The offline behavior indicates a place where the user is predicted to visit (place to be visited next), for example. Alternatively, the offline behavior may indicate any behavior associated with the place where the user is predicted to visit. For example, behavior associated with a gas station (place) may include visiting an automobile-related shop.

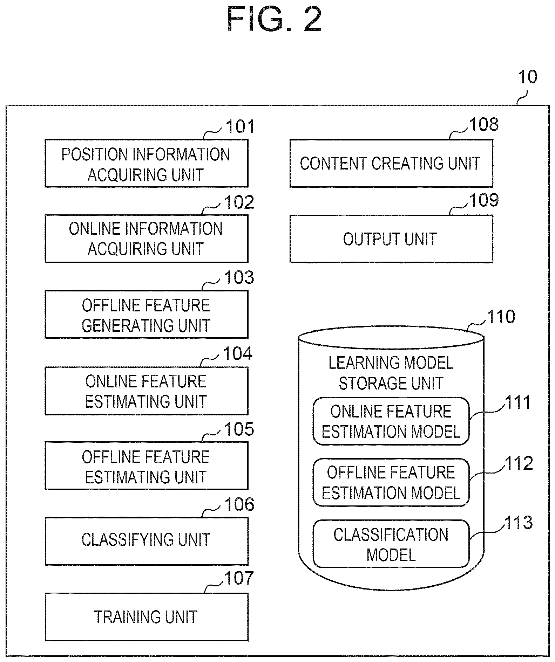

FIG. 2 shows an example of the functional configuration of the information processing apparatus 10 according to the present embodiment.

The information processing apparatus 10 shown in FIG. 2 includes a position information acquiring unit 101, an online information acquiring unit 102, an offline feature generating unit 103, an online feature estimating unit 104, an offline feature estimating unit 105, a classifying unit 106, a training unit 107, a content creating unit 108, an output unit 109, and a learning model storage unit 110. The learning model storage unit 110 stores an online feature estimation model 111, an offline feature estimation model 112, and a classification model 113. The various types of learning models will be described later.

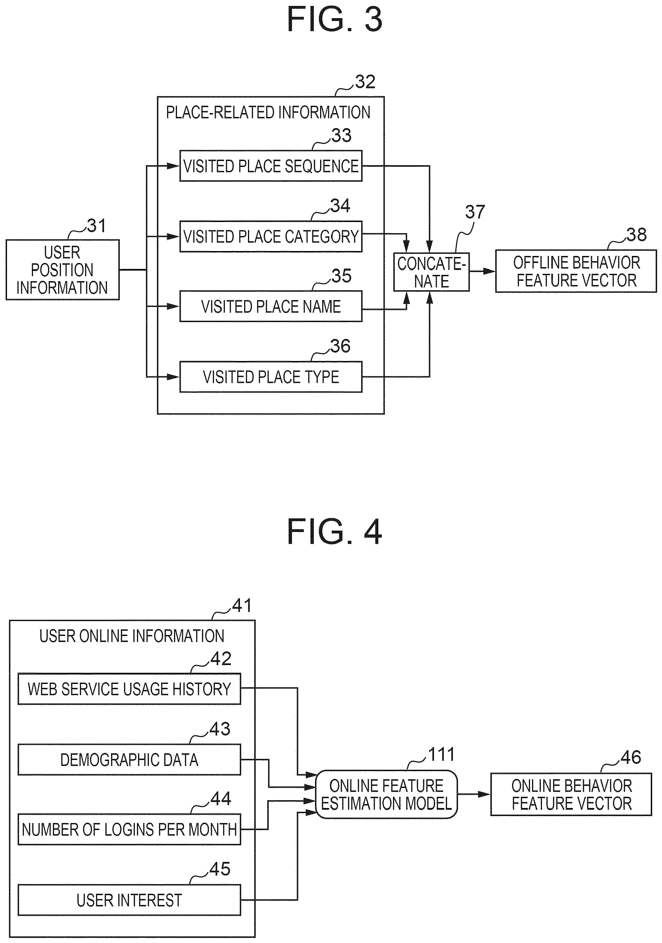

The position information acquiring unit 101 acquires, from each of the user devices (users having position information) of the user devices 11-1 to 11-N, position information of the user of the user device. In the present embodiment, the position information is assumed to include a track of position (track log) of a user device in a range of a fixed period of time, that is, position history information. Moreover, the position information can include place-related information regarding the place where a user has visited (stopped by). The place-related information may include information regarding (1) visited place sequence (series of visited places), (2) visited place category, (3) visited place name, and (4) visited place type. The pieces of place-related information respectively correspond to a visited place sequence 33, a visited place category 34, a visited place name 35, and a visited place type 36 in later-described FIG. 3. Note that the position information acquiring unit 101 may also be configured to generate the place-related information from the acquired position information.

The visited place sequence 33 indicates the sequence of positions of one or more places where the position of a user device did not move for a fixed period of time, and the user is considered to have stayed for the fixed period of time. Alternatively, the visited place sequence may also be the sequence of a plurality of point positions obtained from a track of user position.

The visited place category 34 is a category of visited places derived from positions of one or more places obtained from the visited place sequence 33 and given map information or the like, and indicates basic classification for categorizing properties of places such as a store, a school, a hospital, and a park. Also, the store category may also be subdivided. For example, the visited place category 34 may indicate categories such as a convenience store, a gas station, and a pet-related shop.

The visited place name 35 shows names of visited places derived from positions of one or more places obtained from the visited place sequence 33 and given map information or the like. Note that if the visited place name cannot be acquired from map information or the like, the visited place name 35 may be set as "no information".

The visited place type 36 is text information regarding types of one or more places obtained from the visited place sequence 33. The visited place type 36 can be derived from the visited place category 34 and the visited place name 35, for example, and may show subdivided classifications (of a lower-level layer) relative to the visited place category 34.

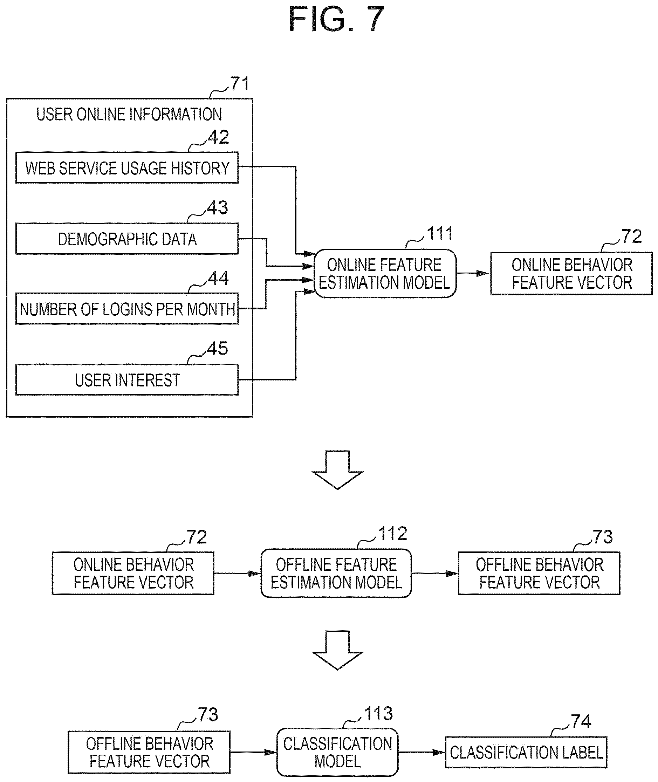

The online information acquiring unit 102 acquires, from each of the user devices of the user devices 11-1 to 11-N, online information of a user of the user device. The online information indicates information regarding behavior of the user through web services when the user is online (online behavior), as described above. In the present embodiment, the online information may include (1) web service usage history, (2) general demographic data, (3) number of logins per month, and (4) information regarding user interest. The pieces of online information respectively correspond to a web service usage history 42, demographic data 43, the number of logins per month 44, and user interest 45 in later-described FIGS. 4 and 7.

The web service usage history 42 is information regarding a history of usage of websites by a user. The web service usage history 42 may include a date, a purchase history in web services, an entry history, a browsing time (corresponding to the display time in a user device 11) of a web service site.

The demographic data 43 indicates demographic user attributes, such as sex, age, residential area, occupation, and family composition of the user, that are registered for the usage of a web service.

The number of logins per month 44 indicates the number of logins per month made by a user on a web service.

The user interest 45 indicates information regarding user interest that has been registered or newly registered for the usage of a web service. The user interest 45 may also be information derived by the information processing apparatus 10 or the user device 11 based on the web service usage history 42.

The offline feature generating unit 103 generates an offline behavior feature vector from the position information acquired by the position information acquiring unit 101. The offline behavior feature vector is a feature vector representing features of the offline behavior described above. The processing for generating the offline behavior feature vector will be described later using FIG. 3.

The online feature estimating unit 104 estimates and generates an online behavior feature vector from the online information acquired by the online information acquiring unit 102. The online behavior feature vector is a feature vector representing the features of the online behavior described above. In the present embodiment, the online feature estimating unit 104 estimates the online behavior feature vector using a trained online feature estimation model 111 stored in the learning model storage unit 110. The online feature estimation model 111 will be described later using FIG. 4.

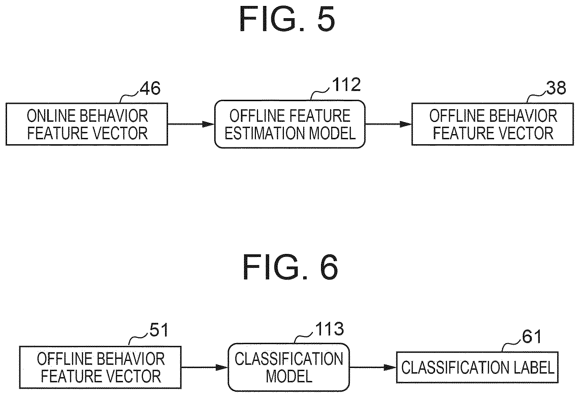

The offline feature estimating unit 105 estimates and acquires an offline behavior feature vector from the online behavior feature vector generated by the online feature estimating unit 104. In the present embodiment, the offline feature estimating unit 105 estimates the offline behavior feature vector using a trained offline feature estimation model 112 stored in the learning model storage unit 110. The offline feature estimation model 112 will be described later using FIG. 5.

The classifying unit 106 estimates and classifies a label corresponding to offline behavior of a user using the offline behavior feature vector estimated by the offline feature estimating unit 105. That is, the classifying unit 106 estimates the offline behavior of the user. In the present embodiment, the classifying unit 106 estimates the label using a trained classification model 113 stored in the learning model storage unit 110. The classification model 113 will be described later using FIG. 6.

The training unit 107 trains the online feature estimation model 111, the offline feature estimation model 112, and the classification model 113, and stores these trained learning models in the learning model storage unit 110.

Based on the estimated offline behavior of a user corresponding to the label estimated by the classifying unit 106, the content creating unit 108 creates content suitable for the offline behavior. The content may be tangible content, or may also be intangible content such as digital content. For example, the content creating unit 108 can create an advertisement suitable for the offline behavior.

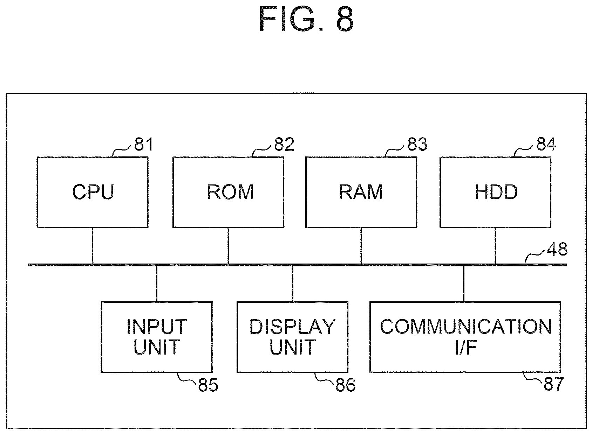

The output unit 109 outputs information regarding a label and offline behavior that are estimated by the classifying unit 106, and content created by the content creating unit 108. The outputting may be any output processing, and may be outputting to an external device via a communication I/F (communication I/F 87 in FIG. 8), or displaying in a display unit (display unit 86 in FIG. 8).

Note that the position information acquiring unit 101 and the online information acquiring unit 102 may be constituted by the same module as an acquiring unit. Also, the online feature estimating unit 104, the offline feature estimating unit 105, and the classifying unit 106 may be constituted by the same module as an estimating unit.

### Training Processing by Training Unit 107

Next, processing in a training stage (training processing) performed by the training unit 107 according to the present embodiment will be described. The training unit 107 performs training processing based on the online information and position information acquired from the user devices 11-1 to 11-N. First, the offline feature generating unit 103 generates an offline behavior feature vector for the training processing.

FIG. 3 shows the procedure for generating an offline behavior feature vector. As shown in FIG. 3, the offline feature generating unit 103 acquires place-related information 32 included in the position information 31 (or generated from position information) of each of the user devices 11-1 to 11-N acquired by the position information acquiring unit 101. Also, the offline feature generating unit 103 generates an offline behavior feature vector 38 by concatenating (concatenate 37) the visited place sequence 33, visited place category 34, visited place name 35, and visited place type 36 that are included in the place-related information 32, and embedding the concatenation in a feature vector space. The offline behavior feature vector 38 is used as correct answer data when training the offline feature estimation model 112. Also, the offline behavior feature vector 38 is used as input data when training the classification model 113.

Next, the training unit 107 trains the online feature estimation model 111.

FIG. 4 shows an example of the schematic architecture of the online feature estimation model 111. The online feature estimation model 111 is a learning model configured to receive online information 41 of a user as an input, and estimate and output an online behavior feature vector 46. The training unit 107 trains the online feature estimation model 111 so as to receive online information 41 of a user as an input and output an online behavior feature vector 46. As described above, in the present embodiment, the online information 41 includes information regarding a web service usage history 42, demographic data 43, the number of logins per month 44, and user interest 45. The online feature estimation model 111 is constituted by a plurality of convolution layers, performs processing, on the online information 41, similar to that of an encoder network (encoding portion) in an autoencoder using a neural network, and outputs an online behavior feature vector 46.

In a training stage, the training unit 107 trains the online feature estimation model 111 using online information 41 acquired from the user devices 11-1 to 11-N, and generates a trained online feature estimation model 111.

The online behavior feature vector 46 is used as input data when training the offline feature estimation model 112.

Next, the training unit 107 trains the offline feature estimation model 112.

FIG. 5 shows an example of a schematic architecture of the offline feature estimation model 112. The offline feature estimation model 112 is a learning model configured to receive an online behavior feature vector as an input, and output an offline behavior feature vector. The training unit 107 trains the offline feature estimation model 112 so as to receive an offline behavior feature vector as an input and output an offline behavior feature vector. The offline feature estimation model 112 may be constituted by a neural network (encoder/decoder model) in which linear transformation is performed between layers.

In the training stage, the training unit 107 trains the offline feature estimation model 112 using the online behavior feature vector 46 serving as input data and the offline behavior feature vector 38 (FIG. 3) serving as the correct answer data, and generates a trained offline feature estimation model 112. The online behavior feature vector 46 serving as input data is a feature vector estimated, using the online feature estimation model 111, from the online information 41 acquired from the user devices 11-1 to 11-N. As described above, the training unit 107 causes the offline feature estimation model 112 to learn, with respect to a user whose position information is known, the relationship between the online behavior feature vector and the offline behavior feature vector. Note that the training procedure of the offline feature estimation model 112 is not limited to this, and the offline feature estimation model 112 may be trained using training data constituted by an online behavior feature vector and an offline behavior feature vector that are defined by another method.

Next, the training unit 107 trains the classification model 113.

FIG. 6 shows an example of the schematic architecture of the classification model 113. The classification model 113 is a classification model (classifier) for classifying, from an offline behavior feature vector, a label corresponding to the offline behavior (classifying offline behavior). The training unit 107 trains the classification model 113 so as to receive an offline behavior feature vector as an input, classify offline behavior, and output information representing the offline behavior. In the present embodiment, labels correspond to places predicted to be visited by a user, as the offline behavior.

In the training stage, the training unit 107 trains the classification model 113 using an offline behavior feature vector 38 serving as input data and a classification label 61 indicating the offline behavior serving as a correct answer label (correct answer data), and generates a trained classification model 113. The classification label 61 serving as a correct answer label is information regarding a place indicated by a visited place category 34 and a visited place name 35 in place-related information 32 that are included in the place-related information 32 used when generating the offline behavior feature vector 38. That is, information regarding the place is set as a place to be visited next. The classification label 61 may be information regarding a plurality of places, or may be information regarding one place.

### Processing for Estimating Offline Behavior

Next, processing for estimating (inferring) offline behavior of a user having no position information will be described with reference to FIG. 7. FIG. 7 is a schematic diagram for describing the processing for estimating offline behavior of a user having no position information. In the present embodiment, the information processing apparatus 10 estimates offline behavior of the user u (user having no position information) based on online information acquired from the user device 11-u using the various types of learning models that are trained using the position information and the online information that are acquired from the user devices 11-1 to 11-N (users having position information).

The online information 71 from the user device 11-u is acquired by the online information acquiring unit 102. The online information 71 includes information regarding a web service usage history 42, demographic data 43, the number of logins per month 44, and user interest 45 with respect to the user u. The online feature estimating unit 104 estimates and generates the online behavior feature vector 72 by applying the online information 71 to the online feature estimation model 111.

After generating the online behavior feature vector 72, the offline feature estimating unit 105 estimates and acquires the offline behavior feature vector 73 by applying the online behavior feature vector 72 to the offline feature estimation model 112.

After generating the offline behavior feature vector 73, the classifying unit 106 estimates and classifies the label (classification label 74) corresponding to the offline behavior of the user u by applying the offline behavior feature vector 73 to the classification model 113. Accordingly, the classifying unit 106 can estimate the offline behavior of the user u, that is, the place predicted to be visited by the user u.

### Hardware Configuration of Information processing apparatus 10

FIG. 8 is a block diagram showing an example of a hardware configuration of the information processing apparatus 10 according to this embodiment.

The information processing apparatus 10 according to the present embodiment can be implemented also on any one or more computers, mobile devices, or other processing platforms.

With reference to FIG. 8, an example is shown in which the information processing apparatus 10 is implemented on a single computer, but the information processing apparatus 10 according to the present embodiment may be implemented on a computer system including a plurality of computers. The plurality of computers may be connected so as to be capable of mutual communication through a wired or wireless network.

As shown in FIG. 8, the information processing apparatus 10 may include a CPU 81, a ROM 82, a RAM 83, an HDD 84, an input unit 85, a display unit 86, a communication I/F 87, and a system bus 88. The information processing apparatus 10 may include an external memory.

The CPU (Central Processing Unit) 81 performs overall control of operations in the information processing apparatus 10, and controls each constituent unit (82 to 87) via the system bus 88, which is a data transmission path.

The ROM (Read Only Memory) 82 is a non-volatile memory that stores control programs and the like needed for the CPU 81 to execute processing. Note that the program may also be stored in a non-volatile memory such as the HDD (Hard Disk Drive) 84 or an SSD (Solid State Drive), or an external memory such as a detachable storage medium (not shown).

The RAM (Random Access Memory) 83 is a volatile memory and functions as a main memory, a work area, and the like of the CPU 81. That is, during execution of processing, the CPU 81 executes various functional operations by loading necessary programs and the like from the ROM 82 to the RAM 83, and executing the programs and the like.

The HDD 84 stores various types of data, various types of information, and the like that are needed when the CPU 81 performs processing using a program. Also, the HDD 84 stores various types of data, various types of information, and the like obtained by the CPU 81 performing processing using a program or the like.

The input unit 85 is constituted by a keyboard or a pointing device such as a mouse.

The display unit 86 is constituted by a monitor such as a liquid crystal display (LCD). The display unit 86 may also function as a GUI (Graphical User Interface) due to being included in combination with the input unit 85.

The communication I/F 87 is an interface that controls communication between the information processing apparatus 10 and an external device.

The communication I/F 87 provides an interface with a network and executes communication with an external device via the network. Various types of data, various types of parameters, and the like are transmitted and received to and from the external device via the communication I/F 87. In this embodiment, the communication I/F 87 may execute communication via a wired LAN (Local Area Network) or a dedicated line conforming to a communication standard such as Ethernet (registered trademark). However, the network that can be used in this embodiment is not limited thereto, and may also be constituted by a wireless network. This wireless network includes a wireless PAN (Personal Area Network) such as Bluetooth (registered trademark), ZigBee (registered trademark), and UWB (Ultra Wide Band). This wireless network also includes a wireless LAN (Local Area Network) such as Wi-Fi (Wireless Fidelity) (registered trademark) and a wireless MAN (Metropolitan Area Network) such as WiMAX (registered trademark). Furthermore, the wireless network includes a wireless WAN (Wide Area Network) such as LTE/3G, 4G, and 5G. Note that it is sufficient that the network connects the devices such that communication is possible therebetween and is capable of communication, and the standard, scale, and configuration of communication is not limited to the above.

The function of at least some of the elements of the information processing apparatus 10 shown in FIG. 8 can be realized by the CPU 81 executing a program. However, the function of at least some of the elements of the information processing apparatus 10 shown in FIG. 8 may also operate as dedicated hardware. In this case, the dedicated hardware operates based on control performed by the CPU 81.

### Hardware Configuration of User Device 11

The hardware configuration of the user device 11 shown in FIG. 1 may be the same as that shown in FIG. 8. That is, the user device 11 can include the CPU 81, the ROM 82, the RAM 83, the HDD 84, the input unit 85, the display unit 86, the communication I/F 87, and the system bus 88. The user device 11 can display various types of information provided by the information processing apparatus 10 on the display unit 86 and perform processing corresponding to an input operation received from the user via the GUI (constituted by the input unit 85 and the display unit 86).

### Flow of Processing

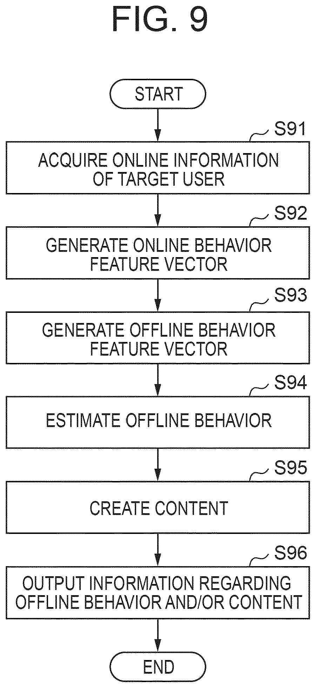

FIG. 9 shows a flowchart of processing executed by the information processing apparatus 10 according to the present embodiment. The processing shown in FIG. 9 can be realized by the CPU 81 of the information processing apparatus 10 loading a program stored in the ROM 82 or the like to the RAM 83 and executing the loaded program. The information processing system shown in FIG. 1 will be referred to for the description of FIG. 9. The online feature estimation model 111, offline feature estimation model 112, and classification model 113 that are trained by the training unit 107 are stored in the learning model storage unit 110, and are used in the following processing.

In step S91, the online information acquiring unit 102 acquires online information (corresponding to online information 71 in FIG. 7) of a target user. In this example, the target user is the user u (user device 11-u) shown in FIG. 1. As described above, in the present embodiment, the online information 71 includes information regarding a web service usage history 42, demographic data 43, the number of logins per month 44, and user interest 45.

In step S92, the online feature generating unit 104 generates an online behavior feature vector 72 of the user u by applying the online information 71 acquired in step S91 to the online feature estimation model 111.

In step S93, the offline feature estimating unit 105 generates an offline behavior feature vector 73 of the user u by applying the online behavior feature vector 72 of the user u generated in step S92 to the offline feature estimation model 112.

In step S94, the classifying unit 106 generates a classification label 74 by applying the offline behavior feature vector 73 of the user u generated in step S93 to the classification model 113. Moreover, the classifying unit 106 estimates (specifies) the offline behavior of the user u corresponding to the generated classification label 74.

In step S95, the content creating unit 108 creates content suitable for the user u based on the offline behavior of the user u estimated in step S94. For example, the content creating unit 108 creates an advertisement suitable for the offline behavior of the user u. If the place estimated as the offline behavior is a gas station, the content creating unit 108 may create advertisements of a gas station and automobile-related stores and services.

In step S96, the output unit 109 outputs information related to the offline behavior of the user u estimated in step S94 and/or the content created in step S95. For example, the output unit 109 transmits information related to the offline behavior of the user u to an external device (not shown), and the external device can utilize the information for marketing. Also, the output unit 109 may transmit the created content to other users having features similar to the features (attributes) of the user u.

As described above, according to the embodiment described above, the information processing apparatus 10 derives the relationship between offline behavior and online behavior by utilizing the online information acquired from a plurality of users. Then, the information processing apparatus 10 can generate offline behavior estimated for a user having no offline information such as position information, using the derived relationship. Accordingly, marketing using offline behavior data can be deployed.

Note that although a specific embodiment has been described above, the embodiment is a mere example and is not intended to limit the scope of the invention. The apparatus and method described in this specification may be implemented in forms aside from the embodiment described above. It is also possible to appropriately make omissions, substitutions, and modifications to the embodiment described above without departing from the scope of the invention. Implementations with such omissions, substitutions, and modifications are included in the scope of the patent claims and their equivalents, and belong to the technical scope of the present invention.

### REFERENCE NUMERALS AND SYMBOLS

- 1 to N: User
- u:: User
- 10:: Information processing apparatus
- 11-1 to 11-N:: User device
- 11-u:: User device
- 101:: Position information acquiring unit
- 102:: Online information acquiring unit
- 103:: Offline feature generating unit
- 104:: Online feature estimating unit
- 105:: Offline feature estimating unit
- 106:: Classifying unit
- 107:: Training unit
- 108:: Content creating unit
- 109:: Output unit
- 110:: Learning model storage unit
- 111:: Online feature estimation model
- 112:: Offline feature estimation model
- 113:: Classification model

## Claims

1. An information processing apparatus comprising:
a first training unit configured to train a first learning model so as to receive online information of a user having position information as an input, and output an online behavior feature vector of the user having the position information; and
a second training unit configured to train a second learning model so as to receive the online behavior feature vector of the user having the position information as an input, and output an offline behavior feature vector of the user having the position information.

2. The information processing apparatus according to claim 1, further comprising:
a generation unit configured to generate an offline behavior feature vector of the user having the position information from the position information; and
a third training unit configured to train a third learning model so as to receive, as an input, the offline behavior feature vector of the user having the position information generated by the generation unit, and output information representing offline behavior of the user having the position information.

3. The information processing apparatus according to claim 2, wherein the information representing offline behavior of the user includes information regarding a place predicted to be visited by the user.

4. The information processing apparatus according to claim 2 or 3, further comprising:
a first estimation unit configured to estimate an online behavior feature vector of a user having no position information by inputting online information of the user having no position information to the first learning model;
a second estimation unit configured to estimate an offline behavior feature vector of the user having no position information by inputting the online behavior feature vector of the user having no position information to the second learning model; and
a third estimation unit configured to estimate information regarding offline behavior of the user having no position information by inputting the offline behavior feature vector of the user having no position information to the third learning model.

5. The information processing apparatus according to any one of claims 1 to 4, wherein the online information of the user is information regarding behavior of the user through usage of web services when the user is online.

6. An information processing method comprising:
a first training step of training a first learning model so as to receive online information of a user having position information as an input, and output an online behavior feature vector of the user having the position information; and
a second training step of training a second learning model so as to receive the online behavior feature vector of the user having the position information as an input, and output an offline behavior feature vector of the user having the position information.

7. The information processing method according to claim 6, further comprising:
a generation step of generating an offline behavior feature vector of the user having the position information from the position information; and
a third training step of training a third learning model so as to receive, as an input, the offline behavior feature vector of the user having the position information output from the second learning model, and output information representing offline behavior of the user having the position information,
wherein, in the third training step, the third learning model is trained using the offline behavior feature vector of the user having the position information generated in the generation step.

8. An information processing program for causing a computer to execute information processing, the program causing the computer to execute processing,
wherein the processing includes:
a first training processing for training a first learning model so as to receive online information of a user having position information as an input, and output an online behavior feature vector of the user having the position information; and
a second training processing for training a second learning model so as to receive the online behavior feature vector of the user having the position information as an input, and output an offline behavior feature vector of the user having the position information.

9. The information processing program, the program causing the computer to execute processing,
wherein the processing further includes:
a generation processing for generating an offline behavior feature vector of the user having the position information from the position information; and
a third training processing for training a third learning model so as to receive, as an input, the offline behavior feature vector of the user having the position information output from the second learning model, and output information representing offline behavior of the user having the position information,
wherein the third training processing includes processing for training the third learning model using the offline behavior feature vector of the user having the position information generated in the generation processing.
